# EUROPEAN PATENT SPECIFICATION

(11) **EP 2 739 917 B1**
(45) Date of publication and mention of the grant of the patent: **14.10.2015**
(21) Application number: 12750861.2
(22) Date of filing: 31.07.2012
(51) Int. Cl.: F24J 2/52

(54) **A CARRIER FOR SOLAR PANELS**
TRÄGER FÜR SONNENKOLLEKTOREN
DISPOSITIF PORTEUR POUR PANNEAUX SOLAIRES

(30) Priority: 05.08.2011 NL 2007228
(43) Date of publication of application: 11.06.2014
(73) Proprietor: Flamco B.V., 3751 LJ Bunschoten (NL)
(72) Inventor: DEVLIN, Terence Arthur, 7312 AP Apeldoorn (NL); CNOSSEN, Jan Henk, 8723 CP Koudum (NL)
(74) Representative: Grootscholten, Johannes A.M.
(86) International application number: PCT/NL2012/050542
(87) International publication number: WO 2013/022340

(56) References cited:
- EP-A1- 1 306 907
- DE-U1-202010 000 557
- JP-A- 2000 269 533
- NL-C2- 2 001 092
- US-A1- 2007 144 575
- US-A1- 2010 212 714

## Description

The present invention relates to a carrier for a solar panel in slanted position, comprising: a base; and a support on the base for a low side of the solar panel, and an assembly of a carrier and a solar panel.

The invention can be applied together with photovoltaic and/or thermal solar panels.

The known carriers are designed and shaped substantially for positioning under a solar panel arranged thereon. Solar panels are mounted on and extending wholly above the carriers. This ensures that no parts of the carrier can cast a shadow on the solar panels arranged thereon, which would reduce the efficiency of this solar panel.

The known carriers do however also have drawbacks, particularly in respect of the resulting weight thereof in combination with a possible ballast or in respect of attachment to for instance a roof of a building. It must be ensured during mounting or unattached placing that an assembly of carrier and solar panel remains stable at a location, even in relatively extreme weather conditions. In order to meet this requirement carriers are known with holders for holding a ballast for the purpose of holding the carrier with the solar panel immobile. A roof or other part of a building has however a limited load-bearing capacity in terms of kilos per unit area. This load-bearing capacity is often insufficient for the carrier having a quantity of ballast required for immobilization purposes therein. Furthermore, the weight of the carrier with the solar panel and the ballast can increase further when rainwater accumulates in a holder for the ballast, so that the load-bearing capacity of the roof is still exceeded following a more less or heavy downpour of rain.

Nor does it usually suffice to rely on fastening means such as screws, bolts and nuts etc., since the forces acting hereon when wind exerts force on a panel are in the longer term almost impossible to withstand. It is only possible to come close to stationary placing using very heavy and robust mounting measures, and even here there is then the risk that the load-bearing capacity of the roof is not equal to such heavy constructions.

Aside from these indications of prior art, reference is made here to EP-1.306.907, which is acknowledged to constitute the closest prior art in relation to the present invention according to the appended claims and in particular the appended independent claim, in which at least the features recited in the characterizing portion are novel relative to this identified prior art publication.

The invention has for its object to obviate or at least reduce the drawbacks of the known carriers and assemblies, for which purpose a carrier and an assembly with this carrier and a solar panel comprise all features of the appended-independent claim.

The use of in particular the claimed vertically upright plate-like edge, extending in the area above the solar panel, runs counter to the wishes and preconceived notions of professionals working in this field.

However, the presence of the wing profile makes it possible according to the present invention that a gust of wind (or steady wind) exerts no force on the carrier or the panel and/or that on the contrary a downward pressure is created on the carrier or the panel. Thus made possible is that ballast can be reduced and/or a mounting construction can be given a lighter form, and the load-bearing capacity of a roof or other part of a building is thus not endangered.

In a possible preferred embodiment of the invention a carrier according to the invention comprises the additional feature that the rear side of the wing profile opposite the support comprises a bearing element for a high side of an adjacent solar panel. The carrier can thus bear a solar panel on either side, and each solar panel can be supported on opposite edges or sides. The carrier can have the feature here of at least one fixing element associated with the bearing element and acting on the solar panel during use. Simple clamps or hooks can for instance form fixing elements. Preferably envisaged are forms of fixing element which are also easy to release for the purpose of maintenance and/or replacement of solar panels and so on. Such "light" mounting means are only possible because the wing profile reduces or even eliminates a lifting force on the panels and/or carriers.

The carrier with the bearing element according to the present invention has the further feature that on the upper side of the wing profile a diffuser is arranged which has the form of an edge protruding above the adjacent solar panel. This protruding and vertically upright plate-like edge achieves that laminar airflows are disrupted so that lift can be reduced or, in determined embodiments, even almost wholly eliminated, and/or downward pressure can be generated.

In an embodiment in which carriers are stackable and nestable, transport can be simplified and the costs thereof reduced.

In a possible preferred embodiment of the invention a carrier according to the invention comprises the additional or alternative feature of at least two trestles at least substantially identical to each other. The trestles are or can be disposed adjacently of each other along an associated low (or high) side of the solar panel in order to provide in combination a support (or a bearing element), or can have been or be disposed opposite each other relative to the solar panel in order to together provide both a support and a bearing element for the solar panel. When the carriers are identical to each other, mounting by workmen can be simplified as a result of smaller numbers of different elements and components.

In a possible preferred embodiment of the invention a carrier according to the invention comprises the additional or alternative feature that the trestles comprise coupling parts and can be coupled releasably to each other in a row. The coupling parts of adjacent trestles can here be complementary coupling parts and/or locking elements can be arranged between two adjacent trestles for the purpose of locking these latter to each other. Simple clamps or hooks can for instance form such locking elements. Preferably envisaged are forms of locking element which are also easy to release for the purpose of maintenance and/or replacement of solar panels, and so on.

In a possible preferred embodiment of the invention a carrier according to the invention has the additional or alternative feature of at least one arresting element associated with the support and acting on the solar panel during use. Simple clamps or hooks can for instance form such arresting elements. Preferably envisaged are forms of arresting element which are also easy to release for the purpose of maintenance and/or replacement of solar panels and so on.

In a possible preferred embodiment of the invention a carrier according to the invention comprises the additional or alternative feature that a passageway is defined between the support and the wing profile. Cleaning and/or maintenance operations can thus be performed from the passageway, this representing a considerable simplification compared to previous carriers wherein cleaning and/or maintenance staff had to manoeuvre between the carriers and panels while balancing with difficulty in order to get at a panel for cleaning or servicing. Tiles or paving can be laid on the passageway to form ballast for the purpose of immobilizing the carriers and the assembly thereof with solar panels.

As already noted, the present invention also relates to an assembly of at least one carrier, having the features stated above or to be further described or defined hereinbelow, in combination with a solar panel positioned in slanted position during use, wherein a low side of the solar panel rests on the support of the carrier.

As already noted, the present invention also relates to an assembly of at least one carrier, having the features stated above or to be further described or defined hereinbelow, in combination with a solar panel positioned in slanted position during use, wherein a high side of the solar panel rests on the bearing element of the carrier.

The carrier thus serves to support or bear a side (high or low) of the solar panel, wherein the wing profile prevents the wind exerting an upward force on the solar panel, or wherein a downward pressure even occurs.

In a possible preferred embodiment of the invention an assembly according to the invention has the additional feature of a first carrier on the high side of the solar panel and a second carrier on the low side of the solar panel, wherein an elongate connecting element is arranged between the first and the second carriers. Such a connecting element can be arranged during assembly in order to maintain the distance between the carriers. At least one of the first and second carriers can comprise a connection here for releasable connection thereof to the connecting element. Additionally or alternatively, the assembly can comprise the feature that indicators are arranged in, on or at the connecting element, these indicators being related to the length of the solar panel between the first and second carriers and the desired angular position of the solar panel relative to the horizontal. The connecting element can thus have, even during assembly, an informative function for workmen who have to carry out the assembly. The carriers can be placed at a suitable distance and the solar panel then arranged thereon, the solar panel fitting in the slanted position thereof between and on the carriers owing to the presetting of the distance between the carriers on the basis of the indicators on, in or at the connecting element.

By way of example - and not by way of limiting or inappropriate explanation of the appended claims - a number of embodiments of a carrier and an assembly according to the present invention will be described hereinbelow with reference to the accompanying drawing, wherein the same or similar parts, components and aspects can be designated with the same reference numerals, and in which:
Figure 1 is a schematic side view of an assembly according to the invention;
Figure 2 shows in simplified manner a method for determining indicators for distances between carriers in an assembly (both according to the invention) in relation to the length and slanted position of the solar panels;
Figure 3 is a perspective view of an assembly according to the invention;
Figures 4 and 5 are perspective views of a carrier in an embodiment modified to some extent compared to that of figure 3;
Figure 6 shows coupling parts on undersides of carriers such as those of figure 3 or figures 4 and 5;
Figure 7 shows a locking element during use for connecting two abutting carriers such as those of figure 3 or figures 4 and 5;
Figures 8 and 9 show a clip in separate perspective views from different viewing points, which clip can be utilized as fixing and/or arresting element;
Figure 10 shows another clip, this clip likewise being usable as fixing and/or arresting element;
Figure 11 shows a connection which can be utilized to connect a carrier such as that of figure 3 or figures 4 and 5 to a connecting element, examples of which are shown in figures 1, 3 and 12;
Figure 12 shows schematically an airflow profile of an assembly such as that shown for instance in figure 1;
Figures 13 and 14 show a carrier in separate perspective views from different viewing points as alternative to the embodiments of figure 3 or figures 4 and 5;
Figure 15 is a side view of the mounting of solar panels on a carrier according to the present invention; and
Figure 16 shows (the use of) a coupling piece between solar panels, particularly when these latter are placed in a "portrait" configuration on the carrier(s) according to the present invention.

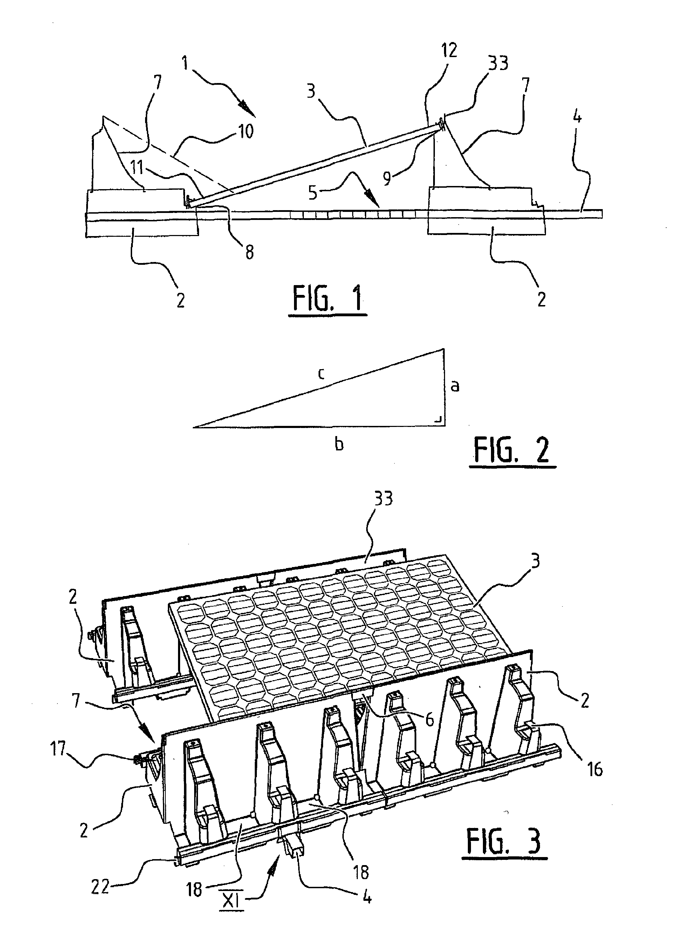

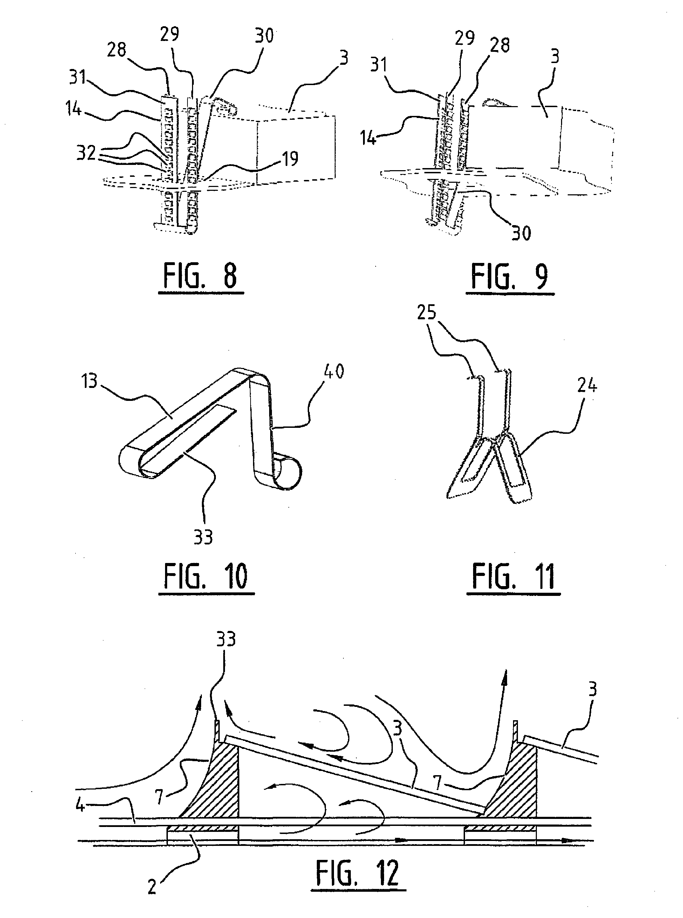

Shown in fig. 1 is an assembly 1 according to the present invention which comprises two carriers or trestles 2, in addition to a solar panel 3 extending between trestles 2. A connecting element 4 is further arranged between trestles 2, and trestles 2 can be arranged thereon, an example of which is shown in fig. 11.

Connecting element 4 comprises in, on or at the surface thereof a number of indicators 5 corresponding to the absolute length of solar panel 3 in combination with the slanted position thereof. The distances at which trestles 2 must be placed will thus be apparent to workmen when they are configuring the assembly 1, on the basis of prior knowledge of the absolute length of solar panels 3. Use is made here of Pythagoras' theorem as shown schematically with reference to fig. 2. The indicators 5 on connecting element 4 correspond to the distance indicator b for the distance between abutting trestles 2, while the absolute length of solar panel 3 corresponds to indicator c. It is further also possible to take into account the angle at which solar panel 3 must come to lie. The length of side a of the right-angled triangle in fig. 2 can be made larger or smaller in the designing of a trestle, although indicators 5 will then also have to be modified. A uniform height a is preferably much rather applied, whereby the angle between sides b and c can vary with the absolute length of solar panel 3, wherein the indicators on different surfaces of connecting element 4 can relate to individual absolute lengths of different types of solar panels 3, and therefore to the acute angle between sides b and c of the right-angled triangle in fig. 2. Reference is made here to the length of the solar panels as the absolute distance between side edges thereof directed toward the trestles. It is possible here for a short side of a solar panel to correspond to side c of the triangle in fig. 2, for instance when the solar panel is placed in a "landscape" position, while the long side of solar panel 3 corresponds to side c in fig. 2 in a portrait arrangement.

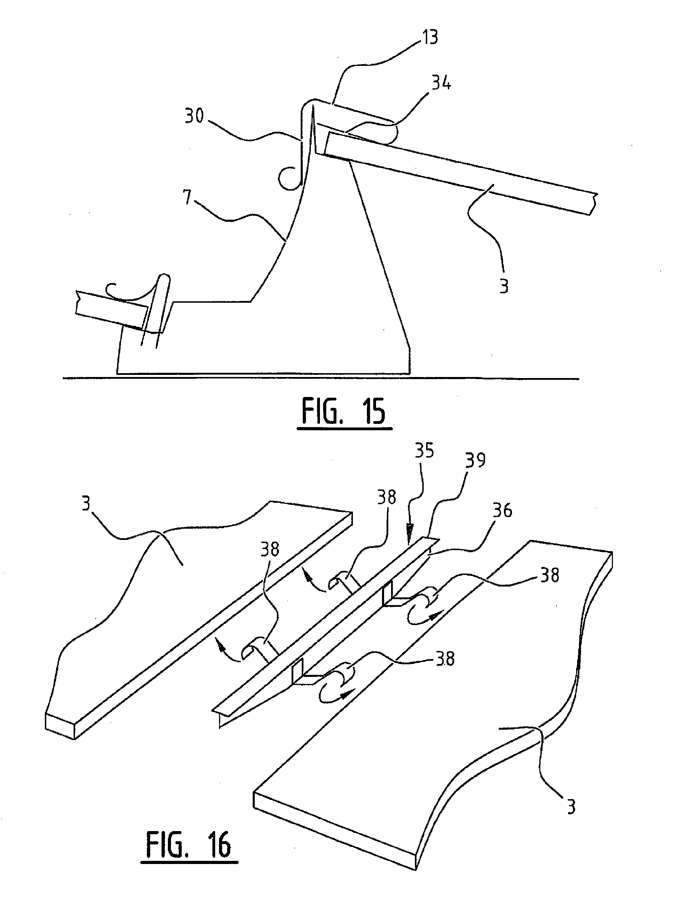

Solar panels 3 are preferably placed in a landscape orientation, since a larger solar panel 3 mainly requires support over the long side. The carrier according to the invention provides this support by placing solar panels 3 in a landscape orientation. In an alternative a coupling profile 35 can be provided which, in the case of placing in a portrait orientation, can be arranged on the long side(s) of a solar panel 3 as shown in fig. 16. In the shown embodiment this coupling piece 35 comprises a T-shaped profile 36 which has at least approximately the same length as a long side 37 of a solar panel 3. In the shown embodiment coupling piece 35 comprises leaf springs 38 for resilient clamping of a solar panel between leaf springs 38 on the one hand and a transverse beam 39 of T-shaped profile 36 on the other. When coupling piece 35 is pushed onto a long side of solar panel 33, this solar panel 3 is thus pressed from below by leaf springs 38 against the upper side of this T-shaped profile 35. The long side 37 is thus supported against sagging, for instance under its own weight or a fall of snow or other load. Coupling piece 35 can always be arranged between two connecting solar panels 3, thereby providing support for both solar panels 3.

When coupling piece 35 is mounted on a final panel 3 in an array or row, the leaf spring or springs 38 on the outer side can be removed.

Fig. 3 is a perspective view of an assembly according to the present invention which is also less schematic than the side view of fig. 1. Shown is a locking element 6 on the upper edge of the individual trestles 2. Clearly shown is that trestles 2 have in each case a downward diverging form at any random point along the height thereof. It will thus be apparent that trestles 2 are stackable and moreover also nestable. It is therefore necessary that locking element 6 spans a distance between abutting trestles 2 in order to mutually connect the trestles 2 at the upper edge thereof.

Clearly shown in the perspective view of fig. 3 is that at a low position of the sun, which can for instance correspond to the viewing point or the viewing angle on which fig. 3 is based, a shadow can be cast on solar panel 3. This shadow, which only occurs at an extremely low position of the sun, is caused by wing profile 7, this running counter to conventional preconceived notions of the person with ordinary skill in the art in this technical field. The shadow cast is indicated in fig. 1 with a broken line 10. A lower-lying side 11 of solar panel 3 rests on a support 8 of a trestle 2, while the higher side 12 of the solar panel rests on a bearing element 9 on the rear side of wing profile 7. Solar panel 3 can be immobilized here by making use, on the side of support 8, of arresting elements such as clip 14 in fig. 8 and 9 or clip 13 in fig. 10. Solar panel 3 in fig. 1 can likewise be immobilized on the righthand side by again using a clip 13 or 14 as in fig. 8, 9 and 10.

Clip 14 in fig. 8 and 9 comprises four legs 28, 29, 30 and 31. Legs 28, 29 and 31 comprises outward oriented protrusions 32 with which clip 14 can be secured in an opening 19 when leg 30 lies against and on a surface of solar panel 3 as shown in fig. 8 and 9. When clip 14 is pressed deeper into opening 19, solar panel 3 is held more firmly against the support or bearing element, while protrusions 32 prevent clip 14 coming out of opening 19.

Clip 13 in fig. 10 is simpler, wherein a leg 33 bends resiliently outward under the surface around opening 19 lying opposite the solar panel when the other leg 40 lies against and on said surface of solar panel 3. Owing to the resilience of the then outward bending leg 33 the leg 40 is held forcefully against the solar panel in order to hold solar panel 3 against a support 8 or bearing element 9. In an alternative use of clip 13 as shown in fig. 15, a leg 33 lies resiliently against solar panel 3 while clip 13 is pushed over the highest outer end of wing profile 7. When solar panel 3 exerts an upward movement on clip 13, leg 34 engages forcefully in wing profile 7, or the edge 33 thereon, without any appreciable increase in the force on solar panel 3. Owing to this clamping resilience, clip 13 will not spring loose of wing profile 7. Only the workmen can remove clip. 13 from wing profile 7 by pulling on the eye of the clip.

It will be apparent that clips 13, 14 can take very light forms while they have to hold solar panel 2 in place against supports 8 or bearing elements 9, this only being possible due to the stationary position of solar panel 3 achieved by reducing the chance of lift, or by even realizing downward pressure as a result of wing profile 7.

Fig. 12 shows clearly that a downward pressure on solar panel 3 occurs in the case of normal airflows coming from the left in fig. 12. Only airflows substantially from the left in fig. 12 can have a lift effect on solar panel 3, were it not for the fact that wing profile 7 in combination with the slanted position of solar panel 3 achieves that airflows become diffuse, or there is even a reversal of the airflows in order to bring about the downward pressure on the solar panel. Arranged here on the upper side of the wing profile is a diffuser which takes the form of an edge 33 protruding above the adjacent solar panel, as shown in fig. 1, 3, 5 and 12. This achieves that laminar airflows can be disrupted, so that lift can be reduced or, in determined embodiments, can even be substantially eliminated, and/or downward pressure can be generated on solar panel 3. In order to enhance this effect the edge 33 protrudes on the upper outer end of wing profile 7, in the manner of a trim, slightly above the highest part of the solar panel. An additional favourable effect of the invention relates to air circulation under solar panel 3 which is favourably enhanced by the interaction of wing profile 7 with protruding edge 33 and the free space created between support 8 or bearing element 9 of trestle 2 and the solar panel 3. This airflow under solar panel 3 is enhanced by the presence of air streams, but also by updraught when wing profile 7 is heated by the sun. These airflows have a cooling effect on solar panel 3, thereby enhancing the efficiency thereof.

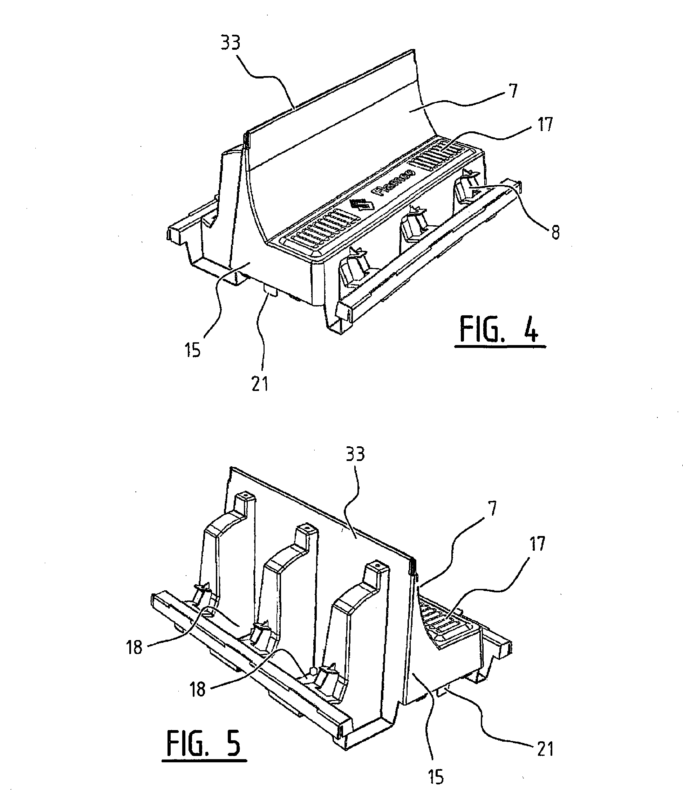

Fig. 4 and 5 show an alternative embodiment of trestles 15. These differ from trestles 2 in fig. 3 only in the absence of brackets 16 which are arranged in the embodiment of fig. 3.

In the embodiment of fig. 3 as well as that of fig. 4 and 5 a passageway 17 is integrated into trestles 2, 15, the passageway 17 extending over trestles 2, 15 between support 8 and wing profile 7. Tiles or paving (not shown) can be placed by way of ballast on the thus formed passageway.

Clearly shown in the views of fig. 3 and 5 is that trestles 2, 15 comprise compartments 18 for receiving ballast therein in the form of for instance stone, sand and so on. Compartments 18 are preferably further also equipped with drainage holes or outlets for draining excess rainwater. Water outlets or irrigation holes can preferably also be arranged in the underside of trestles 2, 15 on the opposite sides, i.e. the rear side of wing profile 7.

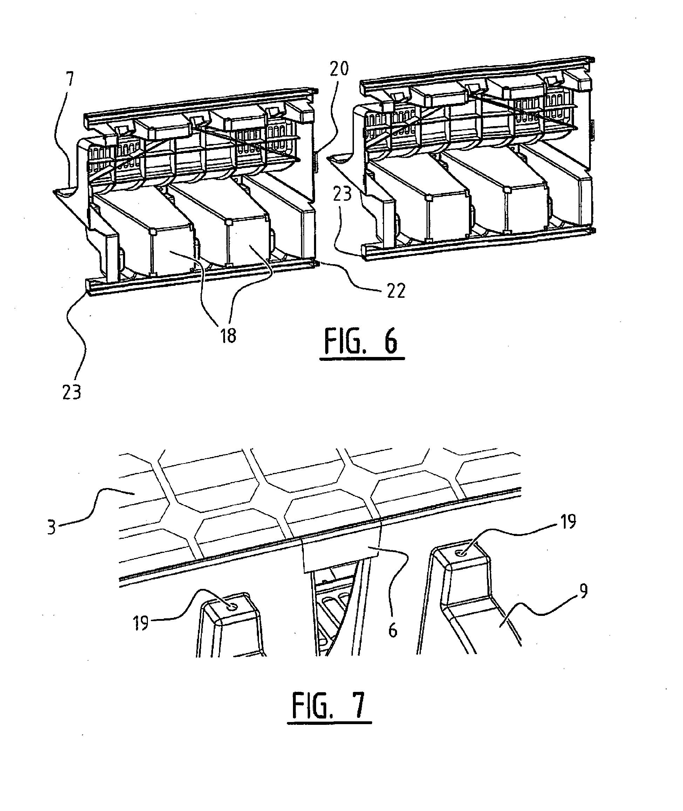

Noted above is that, as also shown in enlarged view in fig. 7, a locking element 6 along the upper side of abutting trestles 2, 15 forms an attachment therebetween. Fig. 7 further shows that receiving holes 19 are arranged above bearing elements 9 for receiving clips therein such as are shown for instance in fig. 8 and 9 or in fig. 10, where the clips are designated with reference numerals 13 and 14. As shown in fig. 6, which is a bottom view, the trestles can further be mutually coupled along edges or sides directed toward each other by means of coupling parts. These coupling parts comprise for instance plates 21 which fit into brackets 20 and hooks 22 which fit into openings 23. During assembly the coupling parts 20, 21 and coupling parts 22, 23 are engaged in each other and locking element in fig. 3 and 7 is then placed in order to bring about a rigid connection between abutting trestles 2, 15. A rigid row of carriers or trestles 2, 15 can thus be formed. Separate rows of carriers or trestles 2, 15 can further be disposed at a desired distance from each other as described with reference to fig. 1 and fig. 2 using connecting elements 4, for instance rods of rectangular or square cross-section, although connecting elements which are round or of other shape are also possible. In the case a rectangular or square rod is used as connecting element 4 it is possible to arrange bracket 24 in fig. 11 round rod 4 and slide it toward a carrier or trestle 2, 15 until arms 25 of brackets 24 can engage on carrier or trestle 2, 15, wherein there is engagement round connecting element 4 and a friction-based connection can thus be effected.

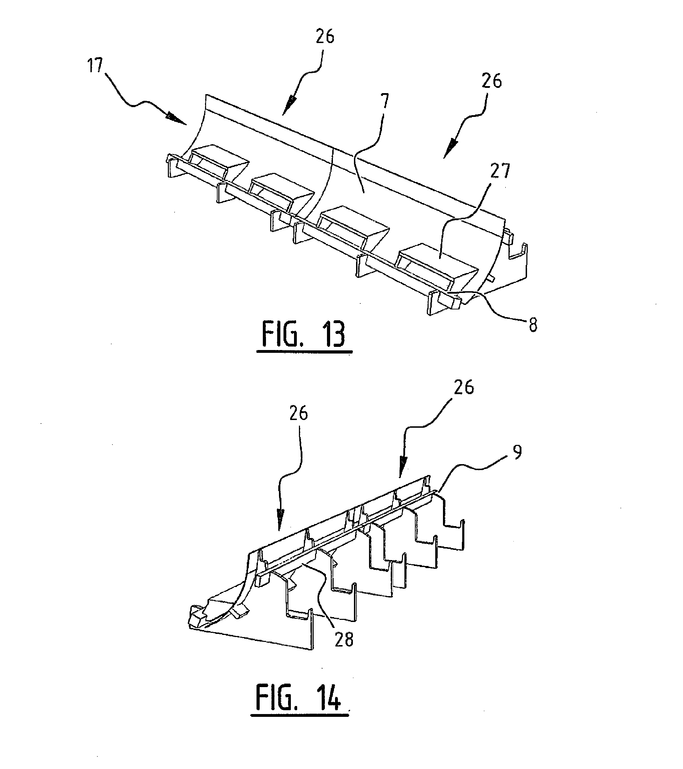

It is noted that the carriers or trestles 2, 15 in the embodiment of fig. 3 and the embodiment of fig. 4 and 5 have closed outer surfaces and as such define an internal space. In the embodiment of fig. 13 and 14 trestles 26 as embodiment of carriers according to the present invention are much more likely to have a character in the form of plates which can be open in all directions. Here too a passageway 17 is provided in the form of steps 27. Trestles 26'are coupled or connected or locked to each other in rows, and the distance between rows of trestles 26 is once again adjustable, this in random manner. Trestles 26 in the embodiment of fig. 13 and 14 in any case also have a curved wing profile 7 which extends upward from a lower-lying side of a solar panel on support 8 in order to bring about a downward pressure on the solar panel. In the view of fig. 14 can be seen a beam 28 which defines the bearing element 9 for placing thereon of the higher side of the solar panel, which is not shown in fig 13 and 14.

It will thus be immediately apparent that a great many alternative and additional embodiments are possible within the scope of the present invention, the limits of which are defined solely in the appended independent claims and the dependent claims, just as the preferred embodiments drawn and described above should in no way be interpreted as wrongful limitation of the scope of protection for the present invention. The trestles as embodiment of carriers need not therefore per se be nestable or stackable, even though this provides evident advantages in transport and assembly. Nor does a compartment need to be provided for ballast when the material from which the trestles are manufactured is sufficiently heavy so that, in combination with the downward pressure or in any case the absence of lift in the case of wind, it is able to remain in place. Lift need not be wholly eliminated, although the wing profile should be designed and intended to reduce lift and possibly even generate a downward pressure in order to compensate lift. None of the fixing elements, connecting elements, arresting elements, coupling parts or other connection measures and members is described or shown here with the purpose indicating the sole option available for mounting panels on the trestles or for mutual connection of the trestles. Integrated claws with resilient engaging elements can also be implemented in the trestles, wherein solar panels need only to be placed in the claws so that arresting elements and fixing elements are integrated or at least need not be provided as separate measures. Such a variant, wherein solar panels drop or are placed into claws which engage round the solar panels along the edges thereof, is that the trestles can be pushed toward each other in adjacent rows along the connecting elements and panels 3 then drop automatically into the claws. If desired, guide tracks or strips can also be implemented for this purpose which carry relevant edges of solar panels to claws for engagement of the edges of the solar panels when the trestles have approached each other sufficiently closely in abutting rows. In yet another embodiment (not shown) the carrier has a two-part or multi-part configuration, wherein a first moulded part with wing profile 7 and passageway 17 and high bearing elements 9 for solar panel 3 can be mounted as releasable coupling part on a lower trestle forming a second moulded part. The lower trestle can also comprise (a part of) passageway 17, and then also comprises the support 8 for solar panel 3 and compartments 18 for receiving ballast therein.

Measures for placing and clamping of connecting element 4 could also be incorporated in the lower trestle.

Such an embodiment of a carrier can bring logistic advantages, although there may also be advantages in terms of production and assembly. In the case of a first row of carriers of assembled trestles, which first row will or can in general be disposed on the south-facing side, the mounting of the moulded part comprising wing profile 7 can moreover be dispensed with. When there is an airflow from this wind direction, a more favourable approach flow of the airflow is hereby realized, and as a result there is less grip on the whole construction.

An important property of the invention is that an array can consist of a plurality of rows of assembled trestles 2 and solar panels 3. Owing to the favourable guiding of airflows only the trestles 2 at outer ends of this array need be provided with ballast. The weight load on a roof construction - when such an array is arranged on a roof - hereby remains minimal.

In yet another embodiment (not shown) the carrier, the trestle part with all details as shown in the figures, is embodied such that the carrier row on the south-facing side of the whole structure can be rotated 180°. Wing profile 7 hereby also forms a more favourable guiding of the wind on this side in the case the approach flow is from southerly direction. Characteristic of this embodiment is that the carrier comprises a low support 8 on both sides.

The above description of alternative embodiments is in no way limitative of the present invention.

## Claims

1. A carrier (2, 2; 26, 26) for at least one solar panel (3) in slanted position, comprising:
- a base;
- a support (8) on the base for a low side (11) of the solar panel (3);
- a curved wing profile (7) extending upward relative to the support (8);
- a bearing element (9) on the rear side of the wing profile (7) opposite the support (8) for arranging thereon a high side (12) of an adjacent solar panel (3); and
- an edge protruding above the adjacent solar panel, **characterized in that**
the edge is a vertically upright plate-like edge (33) on an upper side of the wing profile (7) to form a diffuser designed to disrupt laminar airflows to enhance reduction of lift and/or generation of downward pressure on the solar panel, while generating a cooling forced air circulation under the solar panel.

2. The carrier as claimed in claim 1, wherein at least two carriers (2; 26) are stackable and nestable.

3. The carrier as claimed in claim 1 or 2, comprising at least two trestles (2, 2; 26, 26) at least substantially identical to each other.

4. The carrier as claimed in at least a foregoing claim, wherein carriers (2; 26) comprise coupling parts (20, 21) and can be coupled releasably to each other in a row (2, 2; 26, 26).

5. The carrier as claimed in claim 4, wherein the coupling parts of adjacent carriers are complementary coupling parts (20, 21).

6. The carrier as claimed in at least a foregoing claim, wherein locking elements (6) are arranged close to the upper side of the wing profile (7) between two adjacent carriers (2; 26) for the purpose of locking the carriers (2; 26) to each other.

7. The carrier as claimed in claim 6, wherein the locking elements (6) mutually connect the vertically upright plate-like parts (33) of adjacent carriers (2; 26) forming a diffuser for the purpose of forming a continuous diffuser over the adjacent carriers.

8. The carrier as claimed in at least a foregoing claim, further comprising at least one arresting element (13; 14; 24, 25) associated with the support (8) and acting on the solar panel (3) during use.

9. The carrier as claimed in at least claim 2, further comprising at least one fixing element (13; 14; 24, 25) associated with the bearing element and acting on the solar panel during use.

10. The carrier as claimed in at least a foregoing claim, wherein a passageway (17, 27) is defined on or over the carrier between the support (8) and the wing profile (7).

11. An assembly (1) of at least one carrier (2, 2; 26, 26) as claimed in at least a foregoing claim and a solar panel (3) positioned in slanted position during use, wherein a low side (11) of the solar panel (3) rests on the support (8) of the carrier (2, 2; 26, 26).

12. An assembly (1) of at least one carrier (2, 2; 26, 26) as claimed in at least a foregoing claim and a solar panel (3) positioned in slanted position during use, wherein a high side (12) of the solar panel (3) rests on the bearing element of the carrier (2, 2; 26, 26).

13. The assembly as claimed in claims 11 and 12, with a first carrier (2; 26) on the high side (12) of the solar panel (3) and a second carrier on the low side (11) of the solar panel (3), wherein an elongate connecting element (4) is arranged between the first and the second carriers.

14. The assembly as claimed in claim 13, wherein at least one of the first and second carriers (2; 26) comprises a connection for releasable connection thereof to the connecting element (4).

15. The assembly as claimed in claim 13 or 14, wherein indicators (5) are arranged in, on or at the connecting element (4), these indicators (5) being related to the length of the solar panel (3) between the first and second carriers (2, 2; 26, 26) and the desired angular position of the solar panel (3) relative to the horizontal.

## Patentansprüche

1. Ein Träger (2, 2; 26, 26) für wenigstens ein Solarpaneel (3) in geneigter Stellung, aufweisend:
- eine Basis;
- eine Abstützung (8) an der Basis für eine untere Seite (11) des Solarpaneels (3);
- ein gekrümmtes Flügelprofil (7), welches sich relativ zu der Abstützung (8) nach oben hin erstreckt,
- ein Lagerelement (9) an der hinteren Seite des gekrümmten Flügelprofils (7) entgegengesetzt zu der Abstützung (8) zum Anordnen einer oberen Seite (12) eines benachbarten Solarpaneels (3) daran; und
- einen Rand, welcher oberhalb des benachbarten Solarpaneels vorsteht,
**dadurch gekennzeichnet, dass**
der Rand ein senkrecht stehender plattenartigen Rand (33) an einer oberen Seite des Flügelprofils (7) ist, um einen Diffusor auszubilden, welcher derart ausgestaltet ist, dass er laminare Luftströmungen stört, um eine Verringerung eines Anhebens und/oder eine Erzeugung eines Abwärtsdrucks auf das Solarpaneel zu verstärken, wobei eine kühlende Zwangsluftzirkulation unter dem Solarpaneel erzeugt wird.

2. Der Träger, wie in Anspruch 1 beansprucht, wobei wenigstens zwei Träger (2; 26) stapelbar und ineinander stellbar sind.

3. Der Träger, wie in Anspruch 1 oder 2 beansprucht, aufweisend wenigstens zwei Gestelle (2; 2; 26, 26), welche wenigstens im Wesentlichen identisch zueinander sind.

4. Der Träger, wie in wenigstens einem vorhergehenden Anspruch beansprucht, wobei Träger (2; 26) Verbindungsteile (20, 21) aufweisen und lösbar miteinander in einer Reihe (2, 2; 26, 26) verbunden werden können.

5. Der Träger, wie in Anspruch 4 beansprucht, wobei die Verbindungsteile von benachbarten Trägern komplementäre Verbindungsteile (20, 21) sind.

6. Der Träger, wie in wenigstens einem vorhergehenden Anspruch beansprucht, wobei für den Zweck des Verriegelns der Träger (2; 26) miteinander Verriegelungselemente (6) nahe der oberen Seite des Flügelprofils (7) zwischen zwei benachbarten Trägern (2; 26) angeordnet sind.

7. Der Träger, wie in Anspruch 6 beansprucht, wobei die Verriegelungselemente (6) die senkrecht stehenden plattenartigen Teile (33) von benachbarten Trägern (2; 26) wechselseitig verbinden, wobei ein Diffusor für den Zweck des Ausbildens eines kontinuierlichen Diffusors über die benachbarten Träger ausgebildet wird.

8. Der Träger, wie in wenigstens einem vorhergehenden Anspruch beansprucht, ferner aufweisend wenigstens ein Arretierelement (13; 14; 24, 25), welches mit der Abstützung (8) in Verbindung steht und im Gebrauch auf das Solarpaneel (3) wirkt.

9. Der Träger, wie in wenigstens Anspruch 2 beansprucht, ferner aufweisend wenigstens ein Fixierelement (13; 14; 24, 25), welches mit dem Lagerelement in Verbindung steht und im Gebrauch auf das Solarpaneel wirkt.

10. Der Träger, wie in wenigstens einem vorhergehenden Anspruch beansprucht, wobei ein Gang (17, 27) an oder über dem Träger zwischen der Abstützung (8) und dem Flügelprofil (7) definiert ist.

11. Eine Einrichtung (1) aus wenigstens einem Träger (2, 2; 26, 26), wie in wenigstens einem vorhergehenden Anspruch beansprucht, und einem Solarpaneel (3), welches im Gebrauch in geneigten Stellung positioniert ist, wobei eine untere Seite (12) des Solarpaneels (3) auf der Abstützung (8) des Trägers (2, 2; 26, 26) aufliegt.

12. Eine Einrichtung (1) aus wenigstens einem Träger (2, 2; 26, 26), wie in wenigstens einem vorhergehenden Anspruch beansprucht, und einem Solarpaneel (3), welches im Gebrauch in geneigter Stellung positioniert ist, wobei eine obere Seite (12) des Solarpaneels (3) auf dem Lagerelement des Trägers (2, 2; 26, 26) aufliegt.

13. Die Einrichtung, wie in Ansprüche 11 und 12 beansprucht, mit einem ersten Träger (2; 26) an der oberen Seite (12) des Solarpaneels (3) und einem zweiten Träger an der unteren Seite (11) des Solarpaneels (3), wobei ein längliches Verbindungselement (4) zwischen dem ersten und dem zweiten Träger angeordnet ist.

14. Die Einrichtung, wie in Anspruch 13 beansprucht, wobei wenigstens einer von dem ersten und dem zweiten Träger (2; 26) eine Verbindung zur lösbaren Verbindung davon mit dem Verbindungselement (4) aufweist.

15. Die Einrichtung, wie in Anspruch 13 oder 14 beansprucht, wobei Indikatoren (5) in, auf oder an dem Verbindungselement (4) angeordnet sind, wobei diese Indikatoren (5) mit der Länge des Solarpaneels (3) zwischen dem ersten und dem zweiten Träger (2, 2; 26, 26) und der gewünschten Winkelposition des Solarpaneels relativ zur Horizontalen in Beziehung stehen.

## Revendications

1. Élément porteur (2, 2 ; 26, 26) d'un panneau solaire (3) au moins dans une position inclinée, comprenant :
- une base ;
- un support (8) sur la base, d'un côté bas (11) du panneau solaire (3) ;
- un profilé en aile incurvée (7) qui s'étend vers le haut par rapport au support (8) ;
- un élément de maintien (9) sur le côté arrière du profilé en aile (7) opposé au support (8), destiné à agencer sur celui-ci un côté haut (12) d'un panneau solaire adjacent (3) ; et
- un bord qui fait saillie au-dessus du panneau solaire adjacent ;
**caractérisé en ce que** :
le bord est un bord similaire à une plaque droite verticale (33) d'un côté supérieur du profilé en aile (7), destiné à former un diffuseur conçu de façon à perturber les flux d'air laminaires de manière à augmenter la réduction d'une portance et / ou la génération d'une pression d'appui exercée sur le panneau solaire, tout en générant une circulation forcée d'air de refroidissement sous le panneau solaire.

2. Élément porteur selon la revendication 1, dans lequel deux éléments porteurs (2 ; 26) au moins peuvent être empilés et emboîtés.

3. Élément porteur selon la revendication 1 ou la revendication 2, comprenant au moins deux chevalets (2, 2 ; 26, 26) identiques, au moins sensiblement, l'un par rapport à l'autre.

4. Élément porteur selon l'une quelconque des revendications précédentes, dans lequel les éléments porteurs (2 ; 26) comprennent des parties accouplement (20, 21) et peuvent être couplés de manière détachable l'un par rapport à l'autre, en une rangée (2, 2 ; 26, 26).

5. Élément porteur selon la revendication 4, dans lequel les parties accouplement d'éléments porteurs adjacents sont des parties accouplement complémentaires (20, 21).

6. Élément porteur selon l'une quelconque des revendications précédentes, dans lequel des éléments de verrouillage (6) sont agencés à proximité du côté supérieur du profilé en aile (7) entre deux éléments porteurs adjacents (2 ; 26) de façon à verrouiller les éléments porteurs (2 ; 26) l'un par rapport à l'autre.

7. Élément porteur selon la revendication 6, dans lequel les éléments de verrouillage (6) connectent de manière mutuelle les parties similaires à une plaque droite verticale (33) d'éléments porteurs adjacents (2 ; 26) en formant un diffuseur de façon à former un diffuseur continu au-dessus des éléments porteurs adjacents.

8. Élément porteur selon l'une quelconque des revendications précédentes, comprenant en outre au moins un élément d'arrêt (13 ; 14 ; 24, 25) associé au support (8) et agissant sur le panneau solaire (3) en cours d'utilisation.

9. Élément porteur selon la revendication 2, comprenant en outre au moins un élément de fixation (13 ; 14 ; 24, 25) associé à l'élément de maintien et agissant sur le panneau solaire en cours d'utilisation.

10. Élément porteur selon l'une quelconque des revendications précédentes, dans lequel un passage (17, 27) est défini sur l'élément porteur, ou au-dessus de celui-ci, entre le support (8) et le profilé en aile (7).

11. Assemblage (1) d'un élément porteur (2, 2 ; 26, 26) au moins selon l'une quelconque des revendications précédentes, et d'un panneau solaire (3) positionné dans une position inclinée en cours d'utilisation, dans lequel un côté bas (11) du panneau solaire (3) repose sur le support (8) de l'élément porteur (2, 2 ; 26, 26).

12. Assemblage (1) d'un élément porteur (2, 2 ; 26, 26) au moins selon l'une quelconque des revendications précédentes, et d'un panneau solaire (3) positionné dans une position inclinée en cours d'utilisation, dans lequel un côté haut (12) du panneau solaire (3) repose sur l'élément de maintien de l'élément porteur (2, 2 ; 26, 26).

13. Assemblage selon la revendication 11 et la revendication 12, avec un premier élément porteur (2 ; 26) sur le côté haut (12) du panneau solaire (3) et un deuxième élément porteur sur le côté bas (11) du panneau solaire (3), dans lequel un élément de liaison allongé (4) est agencé entre les premier et deuxième éléments porteurs.

14. Assemblage selon la revendication 13, dans lequel l'un au moins des premier et deuxième éléments porteurs (2 ; 26) comprend une liaison détachable avec l'élément de liaison (4).

15. Assemblage selon la revendication 13 ou la revendication 14, dans lequel des indicateurs (5) sont arrangés dans, sur, ou au niveau de l'élément de connexion (4), ces indicateurs (5) étant associés à la longueur du panneau solaire (3) entre les premier et deuxième éléments porteurs (2, 2 ; 26, 26) et la position angulaire souhaitée du panneau solaire (3) par rapport à l'horizontale.
